Europäisches Patentamt

European Patent Office

Office européen des brevets

(19)

(11) Publication number: **0 580 732 B1**

# EUROPEAN PATENT SPECIFICATION

(45) Date of publication of patent specification: **14.12.94**    (51) Int. Cl.5: **C09K 5/04**

(21) Application number: **92910224.2**

(22) Date of filing: **15.05.92**

(86) International application number:
**PCT/CA92/00208**

(87) International publication number:
**WO 92/20756 (26.11.92 92/29)**

(54) **NON-AZEOTROPIC REFRIGERANT MIXTURE OF R-22, R-23 AND R-152a.**

(30) Priority: **16.05.91 US 700709**

(43) Date of publication of application:
**02.02.94 Bulletin  94/05**

(45) Publication of the grant of the patent:
**14.12.94 Bulletin  94/50**

(84) Designated Contracting States:
**DE FR GB IT**

(56) References cited:
**EP-A- 0 402 937**

**PATENT ABSTRACTS OF JAPAN, unexamined applications, C section, vol. 15, no. 413, October 22, 1991, The Patent Office Japanese Government, see page 99 C 877, Kokai-no. 3-170 589**

(73) Proprietor: **UNIVERSITY OF MONCTON
Research Centre for Energy Conversion
University of Moncton
Moncton, New Brunswick E1A 3E9 (CA)**

(72) Inventor: **SAMI, Samuel
7 Satinwood Drive
Moncton, New Brunswick E1G 1C3 (CA)**

(74) Representative: **Spall, Christopher John
BARKER, BRETTELL & DUNCAN
138 Hagley Road
Edgbaston Birmingham B16 9PW (GB)**

EP 0 580 732 B1

**PATENT ABSTRACTS OF JAPAN**, unexamined applications, C section, vol. 15, no. 409, October 18, 1991, The Patent Office Japanese Government, see page 136 C 878, Kokai-no. 3-168 287

Patent Abstracts of Japan, unexamined applications, C section, vol. 15, no. 409, October 18, 1991, The Patent Office Japanese Government, see page 129 C 876, Kokai-no. 3-168 265

Patent Abstracts of Japan, unexamined applications, C section, vol. 15, no. 409, October 18, 1991, The Patent Office Japanese Government, see page 137 C 876, Kokai-no. 3-168 288

Patent Abstracts of Japan, unexamined applications, C section, vol. 15, no. 409, October 18, 1991, The Patent Office Japanese Government, see page 137 C 876, Kokai-no. 3-168 290

**Description**

1. Technical Field:

This invention relates to a non-azeotropic refrigerant mixture, especially suitable as a working fluid for heat pump applications. By use of these compositions, the cooling and heating efficiencies of heat pumps have been significantly improved. The mixture is entirely compatible with R-22 refrigerant currently used in heat pumps, and so does not require changes in the design of such heat pumps. In addition, with these compositions, the mixture appears to be environmentally acceptable.

2. Background Art:

a) General

The thermodynamic performance of an energy conversion device may be improved by using a non-azeotropic mixture in a vapour cycle. A non-azeotropic mixture has a temperature distribution parallel to that of the surrounding fluid with which heat transfer takes place during the evaporation and condensation processes which are part of the cycle. Interest has increased in recent years in the use of non-azeotropic refrigerant mixtures (NARM) to improve the performance of energy conversion devices.

b) Prior Art

Various NARM have been proposed or used in the past. Usually, these have two components, but some having three (i.e. ternary mixtures) have been proposed, for example in:-
U.S. Patent No. 4,344,292 (Rojey) - issued August 17, 1982.
U.S. Patent No. 4,680,939 (Rojey et al.) - issued July 21, 1987.
U.S. Patent No. 4,812,250 (Ambrosino et al.) - issued March 14, 1989.
However, none of these mixtures provides the thermodynamic advantages of mixtures in accordance with this invention. Also some of the suggested components are environmentally harmful.

c) Brief Description of the Drawings

Reference will be made to the following drawings for a better understanding of non-azeotropic mixtures and the particular mixtures of this invention, i.e.:
Fig. 1 is a temperature-entropy (TS) diagram showing the behaviour of non-azeotropic and single fluid or azeotropic mixtures at constant pressure;
Fig. 2(a) shows boiling and condensation points of a non-azeotropic mixture at various mixture concentrations (x), for constant pressure;
Fig. 2(b) is a (TS) diagram of a heat pump cycle using a non-azeotropic mixture;
Fig. 3 are pressure/temperature graphs of pure refrigerant R-22 and of a mixture in accordance with the invention;
Fig. 4 shows air conditioning outlet temperatures for different refrigerant mixtures;
Fig. 5 shows the coefficient of performance of a heat pump used for heating with different refrigerants;
Fig. 6 shows compressor power used in a heat pump with different refrigerants;
Fig. 7 shows the coefficient of performance of a heat pump used for cooling with different refrigerants;
Fig. 8 shows the refrigerant mass flow rate for a heat pump with different refrigerants;
Fig. 9 shows how the coefficient of performance of a heat pump used for cooling varies with the temperature of the refrigerant entering the evaporator, for different refrigerants; and
Fig. 10 shows how the coefficient of performance of a heat pump used for heating varies with the temperature of the refrigerant entering the evaporator, for different refrigerants.

d) The Behaviour of a Non-Azeotropic Mixture

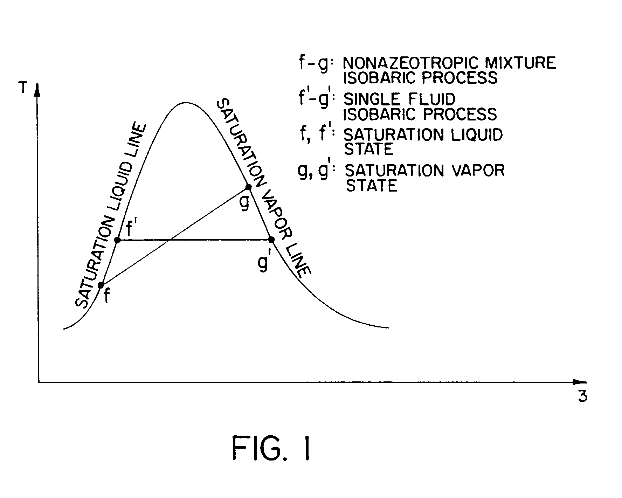

An azeotropic mixture of two substances or more cannot be separated into its components by distillation. Such a mixture evaporates and condenses as a single substance with properties that are different from those of either constituent. Whereas pure substances or azeotropic mixtures have a constant phase changing temperature (e.g. boiling point) at a given pressure, non-azeotropic mixtures show separate boiling and condensing distributions, as shown in Figure 1 by the two isobaric processes fg and f'g'. These

3

EP 0 580 732 B1

lines represent, respectively, the boiling of non-azeotropic mixtures and single fluid or azeotropic mixture.

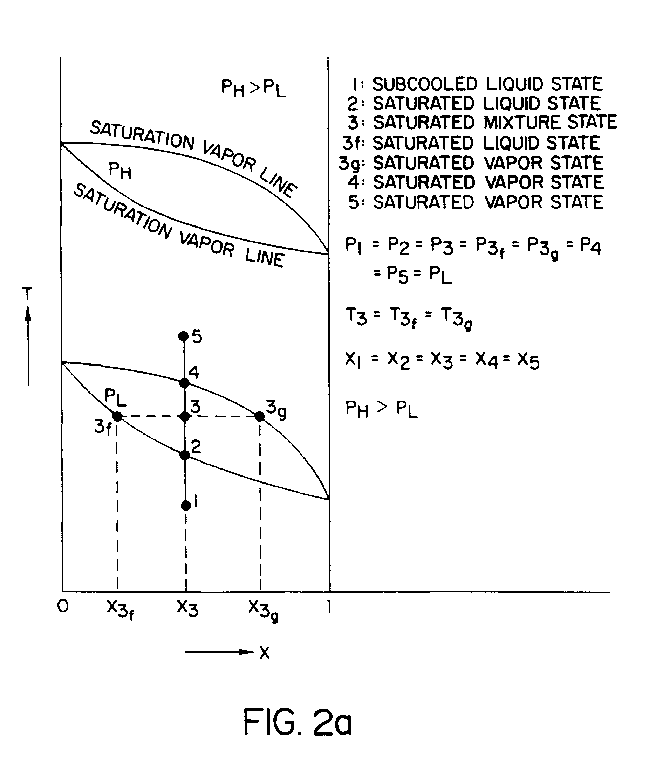

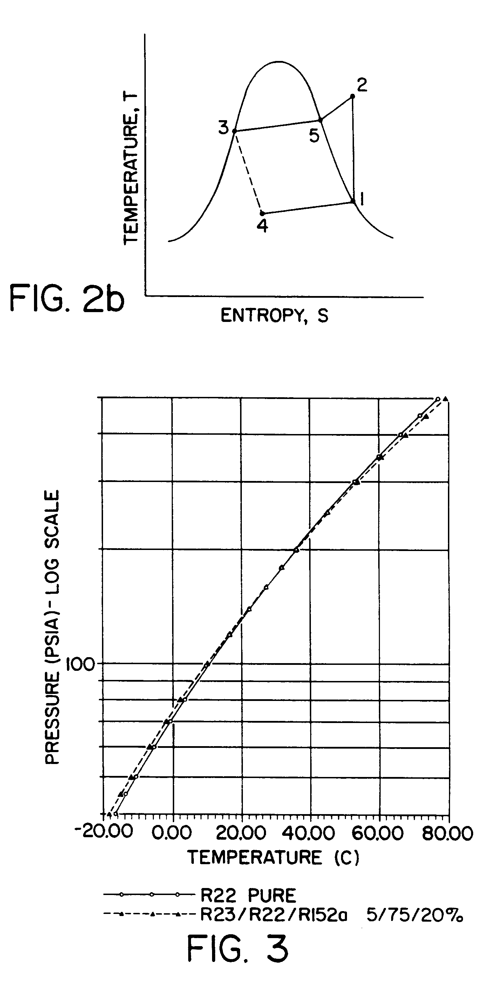

Therefore, at a given composition or concentration, the non-azeotropic mixture condenses and boils over a temperature range by an isobaric heating process 1-2-3-4-5, as clearly shown in Figure 2a. High and low pressure regions, $P_H$ and $P_L$, are also shown on the pressure (p)-mass concentration (x)- temperature (T) diagram.

e) Desirable Properties in Non-Azeotropic Refrigerant Mixtures are as follows:-

Thermodynamic Properties

1. Low condensing pressure
2. Low boiling temperature
3. Low freezing temperature
4. High latent heat of vaporization
5. Proper P-x-T relationship
6. Low vapour and liquid specific volumes
7. Low specific heat of liquid
8. Low specific heat of vapour

Physical Properties

1. High thermal conductivity of vapour
2. Low viscosity
3. Low molecular weight
4. High equilibrium mixing and solubility
5. Solubility with water
6. Solubility with lubricating oil
7. Stability

Chemical Properties

1. Low degrading aspects (i.e. low Greenhouse Depletion Potential)
2. Low ozone compatibility (i.e. low Ozone Depletion Potential)

Safety Properties

1. Non-flammable and Non-explosive
2. Non-toxic
3. Weak odour

Economic Properties

1. Low cost and ready availability
2. High overall heat transfer coefficient

Specific Properties

1. Highly non-azeotropic combination
2. High coefficient of performance (COP)
3. Low volumetric cooling capacity.

3. Disclosure of the Invention:

The present invention provides a unique non-azeotropic refrigerant mixture containing R-22, R-23, and R-152a refrigerants which has a remarkably good coefficient of performance without sacrificing either the thermal capacity or environmentally desirable properties. This invention also provides a refrigerant having the above listed desirable properties. The refrigerant is particularly valuable when used in heat pumps. However, heat pumps units are often capable of use, in hot weather, as air conditioning units, and the

4

refrigerant mixture of this invention is also suitable for air conditioner use. It may also be used in refrigerators or freezers.

In accordance with one aspect of the present invention, a refrigerant comprises a ternary non-azeotropic mixture of known refrigerants, consisting of:

| | |
|---|---|
| R-23 (CHF$_3$; trifluoromethane) | 4-10% |
| R-152a (CH$_3$CHF$_2$; 1,1-difluoroethane) | 4-30% |
| R-22 (CHF$_2$Cl; chlorodifluoromethane) | Balance. |

The precise composition of the mixture will vary with particular working conditions. The following are examples of preferred ranges and compositions:

a) Cold temperature range (0°C - 13°C)

| | Range | Preferred Composition |
|---|---|---|
| R-23 | 4 - 6% | 5% |
| R-152a | 4 - 6% | 5% |
| R-22 | Balance | 90% |
| (composition "a") | | |

b) Very cold temperature range (-30°C - 0°C)

| | Range | Preferred Composition |
|---|---|---|
| R-23 | 7 - 10% | 8% |
| R-152a | 4 - 6% | 5% |
| R-22 | Balance | 87% |
| (composition "b") | | |

c) Warm temperature range (13°C - 20°C)

| | Range | Preferred Composition | |
|---|---|---|---|
| R-23 | 4 - 6% | 5% | 5% |
| R-152a | 8 - 30% | 20% | 10% |
| R-22 | Balance | 75% | 85% |
| (composition "c$_1$") (composition "c$_2$") | | | |

4. Thermodynamic Properties of Mixture

The Carnhan-Starling-DeSantis (CDS) equation of state has been employed to calculate the thermodynamic properties of the proposed non-azeotropic mixtures in the different phases. Tables 1, 2 and 3 give the thermodynamic properties including temperatures during evaporation and condensation at various pressures. The Tables are for the following preferred compositions (see above):

| | R-22 | R-23 | R-152a |
|---|---|---|---|
| a) | 90 | 5 | 5 |
| b) | 87 | 8 | 5 |
| c$_1$) | 75 | 5 | 20 |

As is usual in this art, composition percentages in this Specification are by weight or "mass fraction"; see headings of Tables 1, 2 and 3.

The semi-logarithmic pressure-temperature diagram displayed in Figure 3 shows that the proposed composition ($c_1$) behaves as a homogeneous refrigerant over the investigated range having pressure/temperature characteristics similar to R-22. This is a significant characteristic, since handling and packaging expose the refrigerant to various temperatures. The similarity to R-22 means that standard heat pumps which use R-22 can utilize this mixture without modification.

5. Environmental Properties

With the concentration of 1,1-difluoroethane (R-152a) in the mixture not higher than 30% by weight, the proposed non-azeotropic mixture is nonflammable.

The proposed mixture is a relatively environmentally friendly refrigerant because of the following characteristics:

- Mixture components R-22, R-23, and R-152a have acceptable Ozone Depletion Potential (ODP) of 0.05, 0.00, and 0.00 respectively.
- The three components R-22, R-23, and R-152a also have very low Greenhouse Depletion Potential (GDP) of 0.07, 0.00, and less than 0.1 respectively.

It is worthwhile mentioning that the components of the mixture R-22, R-23, and R-152a are currently mass-produced, and also meet existing regulations on the use of refrigerants and their short and long term effects impact on the environment. This distinguishes the mixture of R-22, R-23 and R-152a from most of the mixtures of the above-cited patents.

6. Comparison with other Refrigerants:

Performance of Mixture

The mixtures of the said refrigerants as described hereby has been found to result in a very desirable mixture in attaining low evaporating temperature and a reasonable head pressure and can be used with conventional heat pumps without the requirement for any major modifications or change in equipment.

The performance of a 65,000 Btu/hr. water/air heat pump using the mixture is discussed in the following. This heat pump comprises a water/refrigerant evaporator into which the mixture is introduced and from which it is discharged to a hermetic compressor for compressing the vapour mixture into an air finned condenser. After condensation, the mixture is discharged to an expansion valve; it is finally expanded through the expansion valve and recycled to the evaporator.

Tests have been conducted with the refrigerant mixtures using water temperatures from 4°C to 19°C at constant air temperature of 20°C at the inlet to the air condenser.

The heat pump is operated first with R-22, then with the binary mixture R-22/R-23 at 95%/5%, and finally with the proposed mixture R-22/R-23/R-152a at compositions of 85%/5%/10% ($c_2$ above) and 75%/5%/20% ($c_1$ above).

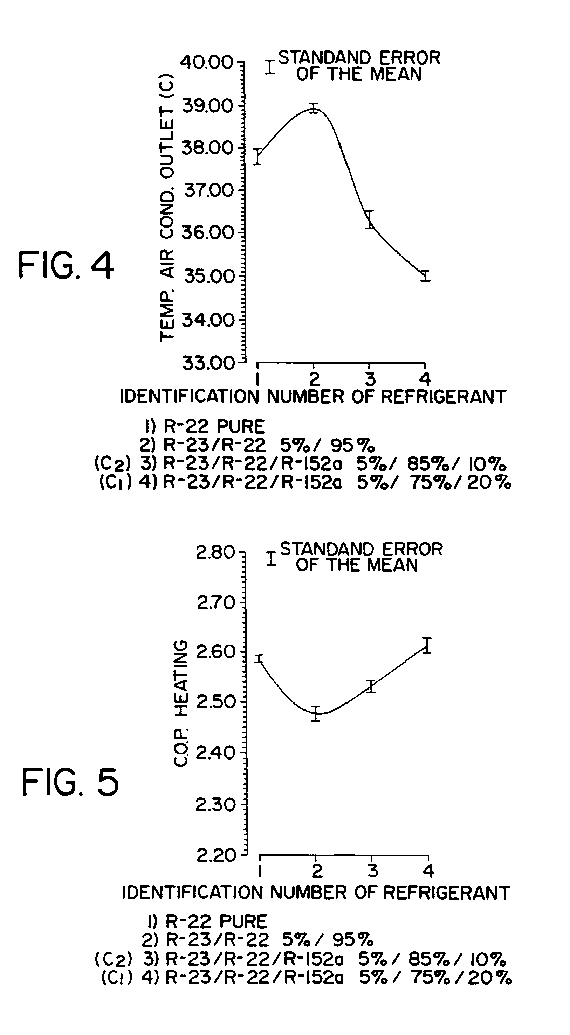

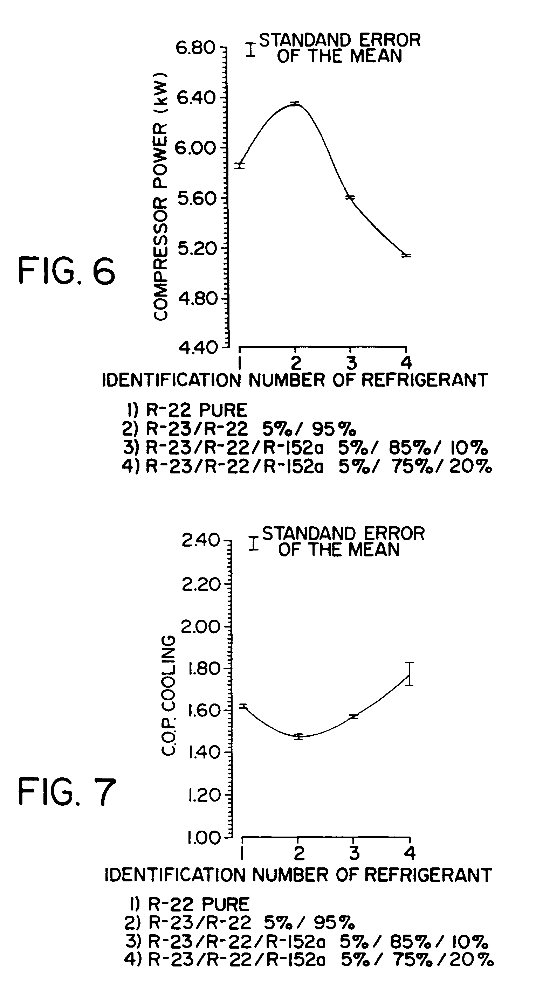

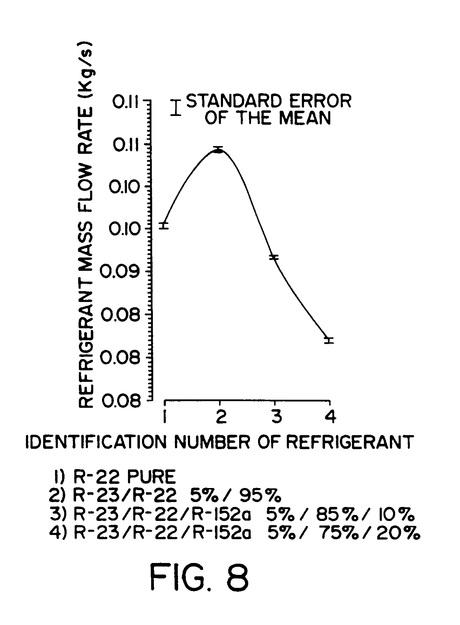

Samples of the experimental results, obtained at entering water temperature to the evaporator of 19°C and air entering temperature to the condenser of 20°C, are displayed in Figures 4 through 8. The coefficient of performance (COP) shown in Figs. 5 and 7 is defined as the ratio of the heat power delivered by the heat pump to the electric power consumed by the motor which drives the compressor. The depicted results show that the proposed refrigerant mixture provides more desirable operating characteristics than can be attained with a single refrigerant. It will be noted that COP is significantly better using the $c_1$ mixture (#4 in graph) than using R-22 or R-22/R-23 (#1 and #2). Although the $C_2$ mixture (#3 in graph) is only moderate for COP, it does show a significant advantage in terms of compressor power (Fig. 6).

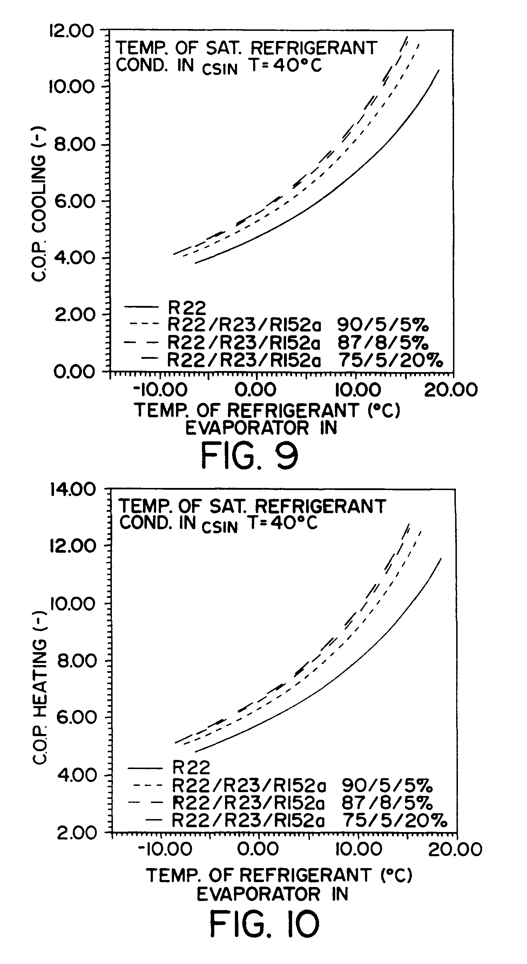

Figures 9 and 10 demonstrate the effect of varying the refrigerant temperature at the evaporator side on the coefficient of performance (COP) for pure R-22, composition "a", composition "b", and composition "$c_1$". It is quite clear that the use of this refrigerant mixture results in an efficient COP at a cost saving in compressor maintenance and replacement. Also, as indicated above, the components are readily available and environmentally acceptable.

Table 1 - Composition "a" - Cold Temperature Range
R-22 - 90%;  R-23 - 5%;  R-152a - 5%

```
1   SATURATION PROPERTIES FOR   R23  /R22  /R152A /
    MIXING COEFFICIENT(S):  0.000 0.000 0.000
    COMPOSITION:  0.050 MASS FRACTION = 0.060 MOLE FRACTION R23
                  0.900 MASS FRACTION = 0.876 MOLE FRACTION R22
                  0.050 MASS FRACTION = 0.064 MOLE FRACTION R152A
    CRITICAL TEMPERATURE TC =    375.26 [K]
    CRITICAL PRESSURE PC=   5699.83 [KPA]
```

| PRESSURE | TEMPERATURE | | DENSITY | | ENTHALPY | | | ENTROPY | |
|---|---|---|---|---|---|---|---|---|---|
| | LIQ | VAP | LIQ | VAP | LIQ | EVAP | VAP | LIQ | VAP |
| (PSIA) | (F) | | (LB/FT³³3) | | --- (BTU/LB) --- | | | (BTU/LB F) | |
| 55.000 | 7.596 | 17.748 | 81.059 | 0.985 | 12.804 | 95.708 | 108.512 | 0.039 | 0.241 |
| 60.000 | 12.222 | 22.262 | 80.526 | 1.070 | 14.092 | 94.883 | 108.974 | 0.042 | 0.240 |
| 65.000 | 16.563 | 26.498 | 80.021 | 1.156 | 15.307 | 94.093 | 109.400 | 0.045 | 0.240 |
| 70.000 | 20.657 | 30.492 | 79.539 | 1.241 | 16.459 | 93.334 | 109.793 | 0.047 | 0.239 |
| 75.000 | 24.536 | 34.275 | 79.077 | 1.327 | 17.557 | 92.601 | 110.158 | 0.049 | 0.238 |
| 80.000 | 28.223 | 37.871 | 78.634 | 1.413 | 18.606 | 91.892 | 110.498 | 0.051 | 0.237 |
| 85.000 | 31.740 | 41.300 | 78.206 | 1.499 | 19.612 | 91.204 | 110.815 | 0.054 | 0.237 |
| 90.000 | 35.104 | 44.580 | 77.793 | 1.585 | 20.578 | 90.535 | 111.113 | 0.055 | 0.236 |
| 95.000 | 38.331 | 47.725 | 77.394 | 1.671 | 21.510 | 89.882 | 111.392 | 0.057 | 0.236 |
| 100.000 | 41.432 | 50.748 | 77.006 | 1.757 | 22.410 | 89.246 | 111.655 | 0.059 | 0.235 |
| 105.000 | 44.419 | 53.658 | 76.628 | 1.844 | 23.280 | 88.623 | 111.903 | 0.061 | 0.235 |
| 110.000 | 47.302 | 56.466 | 76.261 | 1.931 | 24.124 | 88.014 | 112.137 | 0.062 | 0.234 |
| 115.000 | 50.088 | 59.180 | 75.903 | 2.018 | 24.942 | 87.416 | 112.358 | 0.064 | 0.234 |
| 120.000 | 52.785 | 61.806 | 75.552 | 2.105 | 25.739 | 86.829 | 112.568 | 0.066 | 0.233 |
| 125.000 | 55.399 | 64.352 | 75.210 | 2.193 | 26.513 | 86.252 | 112.766 | 0.067 | 0.233 |
| 130.000 | 57.937 | 66.822 | 74.875 | 2.280 | 27.269 | 85.685 | 112.954 | 0.068 | 0.232 |
| 135.000 | 60.403 | 69.222 | 74.546 | 2.368 | 28.006 | 85.126 | 113.132 | 0.070 | 0.232 |
| 140.000 | 62.802 | 71.556 | 74.223 | 2.457 | 28.726 | 84.576 | 113.302 | 0.071 | 0.231 |
| 145.000 | 65.138 | 73.829 | 73.906 | 2.546 | 29.429 | 84.033 | 113.462 | 0.073 | 0.231 |
| 150.000 | 67.415 | 76.044 | 73.595 | 2.635 | 30.118 | 83.497 | 113.615 | 0.074 | 0.231 |
| 155.000 | 69.637 | 78.205 | 73.288 | 2.724 | 30.793 | 82.968 | 113.761 | 0.075 | 0.230 |
| 160.000 | 71.806 | 80.314 | 72.986 | 2.814 | 31.454 | 82.445 | 113.899 | 0.076 | 0.230 |
| 165.000 | 73.925 | 82.374 | 72.689 | 2.904 | 32.102 | 81.928 | 114.030 | 0.078 | 0.230 |
| 170.000 | 75.998 | 84.389 | 72.396 | 2.994 | 32.739 | 81.417 | 114.155 | 0.079 | 0.229 |
| 175.000 | 78.026 | 86.360 | 72.106 | 3.085 | 33.364 | 80.910 | 114.274 | 0.080 | 0.229 |
| 180.000 | 80.012 | 88.289 | 71.821 | 3.176 | 33.978 | 80.409 | 114.387 | 0.081 | 0.229 |
| 185.000 | 81.958 | 90.179 | 71.539 | 3.267 | 34.582 | 79.912 | 114.495 | 0.082 | 0.228 |
| 190.000 | 83.866 | 92.031 | 71.260 | 3.359 | 35.177 | 79.420 | 114.597 | 0.083 | 0.228 |
| 195.000 | 85.736 | 93.848 | 70.984 | 3.452 | 35.762 | 78.932 | 114.694 | 0.084 | 0.228 |
| 200.000 | 87.572 | 95.630 | 70.712 | 3.544 | 36.338 | 78.447 | 114.786 | 0.085 | 0.227 |
| 205.000 | 89.375 | 97.379 | 70.442 | 3.637 | 36.906 | 77.967 | 114.873 | 0.086 | 0.227 |
| 210.000 | 91.146 | 99.097 | 70.175 | 3.731 | 37.466 | 77.490 | 114.956 | 0.087 | 0.227 |
| 215.000 | 92.886 | 100.785 | 69.910 | 3.825 | 38.018 | 77.016 | 115.034 | 0.088 | 0.226 |
| 220.000 | 94.596 | 102.444 | 69.648 | 3.919 | 38.563 | 76.546 | 115.108 | 0.089 | 0.226 |
| 225.000 | 96.279 | 104.075 | 69.388 | 4.014 | 39.101 | 76.078 | 115.179 | 0.090 | 0.226 |
| 230.000 | 97.934 | 105.680 | 69.131 | 4.109 | 39.632 | 75.613 | 115.245 | 0.091 | 0.225 |
| 235.000 | 99.563 | 107.259 | 68.875 | 4.205 | 40.156 | 75.151 | 115.307 | 0.092 | 0.225 |
| 240.000 | 101.168 | 108.813 | 68.621 | 4.301 | 40.674 | 74.692 | 115.366 | 0.093 | 0.225 |
| 245.000 | 102.748 | 110.344 | 68.370 | 4.398 | 41.186 | 74.235 | 115.421 | 0.094 | 0.225 |

Table 1 (Continued)

| 250.000 | 104.304 | 111.851 | 68.120 | 4.495 | 41.693 | 73.780 | 115.473 | 0.095 | 0.224 |
| 255.000 | 105.838 | 113.337 | 67.871 | 4.592 | 42.194 | 73.328 | 115.521 | 0.095 | 0.224 |
| 260.000 | 107.351 | 114.801 | 67.625 | 4.691 | 42.689 | 72.877 | 115.566 | 0.096 | 0.224 |
| 265.000 | 108.842 | 116.244 | 67.380 | 4.789 | 43.180 | 72.429 | 115.608 | 0.097 | 0.224 |
| 270.000 | 110.313 | 117.668 | 67.136 | 4.888 | 43.665 | 71.982 | 115.647 | 0.098 | 0.223 |
| 275.000 | 111.765 | 119.072 | 66.894 | 4.988 | 44.146 | 71.537 | 115.683 | 0.099 | 0.223 |
| 280.000 | 113.198 | 120.457 | 66.653 | 5.088 | 44.622 | 71.094 | 115.716 | 0.100 | 0.223 |
| 285.000 | 114.612 | 121.824 | 66.414 | 5.189 | 45.093 | 70.652 | 115.746 | 0.100 | 0.222 |
| 290.000 | 116.008 | 123.174 | 66.175 | 5.290 | 45.561 | 70.212 | 115.773 | 0.101 | 0.222 |
| 295.000 | 117.387 | 124.506 | 65.938 | 5.392 | 46.024 | 69.773 | 115.797 | 0.102 | 0.222 |
| 300.000 | 118.749 | 125.822 | 65.702 | 5.494 | 46.483 | 69.336 | 115.819 | 0.103 | 0.222 |

| PRESSURE | TEMPERATURE | | CV | | CP | |
|---|---|---|---|---|---|---|
| | LIQ | VAP | LIQ | VAP | LIQ | VAP |
| (PSIA) | (F) | | BTU/LB F | | BTU/LB F | |
| 5.000 | -90.465 | -77.976 | 0.212 | 0.111 | 0.248 | 0.136 |
| 10.000 | -66.941 | -55.023 | 0.217 | 0.116 | 0.254 | 0.142 |
| 15.000 | -51.605 | -40.052 | 0.220 | 0.119 | 0.258 | 0.145 |
| 20.000 | -39.914 | -28.637 | 0.222 | 0.121 | 0.262 | 0.149 |
| 30.000 | -22.157 | -11.298 | 0.225 | 0.125 | 0.267 | 0.154 |
| 40.000 | -8.951 | 1.986 | 0.228 | 0.127 | 0.271 | 0.158 |
| 45.000 | -2.718 | 7.681 | 0.229 | 0.129 | 0.273 | 0.160 |
| 50.000 | 2.637 | 12.908 | 0.230 | 0.130 | 0.275 | 0.162 |
| 55.000 | 7.596 | 17.748 | 0.230 | 0.131 | 0.277 | 0.164 |
| 60.000 | 12.222 | 22.262 | 0.231 | 0.132 | 0.278 | 0.166 |
| 65.000 | 16.563 | 26.498 | 0.232 | 0.133 | 0.280 | 0.168 |
| 70.000 | 20.657 | 30.492 | 0.232 | 0.133 | 0.282 | 0.169 |
| 75.000 | 24.536 | 34.275 | 0.233 | 0.134 | 0.283 | 0.171 |
| 80.000 | 28.223 | 37.871 | 0.234 | 0.135 | 0.285 | 0.173 |
| 85.000 | 31.740 | 41.300 | 0.234 | 0.136 | 0.286 | 0.174 |
| 90.000 | 35.104 | 44.580 | 0.235 | 0.137 | 0.287 | 0.176 |
| 95.000 | 38.331 | 47.725 | 0.235 | 0.137 | 0.289 | 0.178 |
| 100.000 | 41.432 | 50.748 | 0.235 | 0.138 | 0.290 | 0.179 |
| 105.000 | 44.419 | 53.658 | 0.236 | 0.139 | 0.292 | 0.181 |
| 110.000 | 47.302 | 56.466 | 0.236 | 0.139 | 0.293 | 0.183 |
| 115.000 | 50.088 | 59.180 | 0.237 | 0.140 | 0.294 | 0.184 |
| 120.000 | 52.785 | 61.806 | 0.237 | 0.141 | 0.296 | 0.186 |
| 125.000 | 55.399 | 64.352 | 0.237 | 0.141 | 0.297 | 0.187 |
| 130.000 | 57.937 | 66.822 | 0.238 | 0.142 | 0.298 | 0.189 |
| 135.000 | 60.403 | 69.222 | 0.238 | 0.142 | 0.300 | 0.190 |
| 140.000 | 62.802 | 71.556 | 0.238 | 0.143 | 0.301 | 0.192 |
| 145.000 | 65.138 | 73.829 | 0.238 | 0.144 | 0.302 | 0.194 |
| 150.000 | 67.415 | 76.044 | 0.239 | 0.144 | 0.304 | 0.195 |
| 155.000 | 69.637 | 78.205 | 0.239 | 0.145 | 0.305 | 0.197 |
| 160.000 | 71.806 | 80.314 | 0.239 | 0.145 | 0.306 | 0.198 |
| 165.000 | 73.925 | 82.374 | 0.239 | 0.146 | 0.307 | 0.200 |
| 170.000 | 75.998 | 84.389 | 0.240 | 0.146 | 0.309 | 0.202 |
| 175.000 | 78.026 | 86.360 | 0.240 | 0.147 | 0.310 | 0.203 |
| 180.000 | 80.012 | 88.289 | 0.240 | 0.147 | 0.311 | 0.205 |
| 185.000 | 81.958 | 90.179 | 0.240 | 0.148 | 0.313 | 0.207 |
| 190.000 | 83.866 | 92.031 | 0.240 | 0.148 | 0.314 | 0.208 |

Table 1 (Continued)

| | | | | | | |
|---|---|---|---|---|---|---|
| 195.000 | 85.736 | 93.848 | 0.241 | 0.149 | 0.315 | 0.210 |
| 200.000 | 87.572 | 95.630 | 0.241 | 0.149 | 0.317 | 0.212 |
| 205.000 | 89.375 | 97.379 | 0.241 | 0.150 | 0.318 | 0.213 |
| 210.000 | 91.146 | 99.097 | 0.241 | 0.150 | 0.320 | 0.215 |
| 215.000 | 92.886 | 100.785 | 0.241 | 0.151 | 0.321 | 0.217 |
| 220.000 | 94.596 | 102.444 | 0.241 | 0.151 | 0.322 | 0.219 |
| 225.000 | 96.279 | 104.075 | 0.242 | 0.152 | 0.324 | 0.220 |
| 230.000 | 97.934 | 105.680 | 0.242 | 0.152 | 0.325 | 0.222 |
| 235.000 | 99.563 | 107.259 | 0.242 | 0.153 | 0.327 | 0.224 |
| 240.000 | 101.168 | 108.813 | 0.242 | 0.153 | 0.328 | 0.226 |
| 245.000 | 102.748 | 110.344 | 0.242 | 0.153 | 0.330 | 0.228 |
| 250.000 | 104.304 | 111.851 | 0.242 | 0.154 | 0.331 | 0.230 |
| 255.000 | 105.838 | 113.337 | 0.242 | 0.154 | 0.333 | 0.231 |
| 260.000 | 107.351 | 114.801 | 0.242 | 0.155 | 0.334 | 0.233 |
| 265.000 | 108.842 | 116.244 | 0.242 | 0.155 | 0.336 | 0.235 |
| 270.000 | 110.313 | 117.668 | 0.242 | 0.156 | 0.337 | 0.237 |
| 275.000 | 111.765 | 119.072 | 0.243 | 0.156 | 0.339 | 0.239 |
| 280.000 | 113.198 | 120.457 | 0.243 | 0.157 | 0.340 | 0.241 |
| 285.000 | 114.612 | 121.824 | 0.243 | 0.157 | 0.342 | 0.243 |
| 290.000 | 116.008 | 123.174 | 0.243 | 0.157 | 0.344 | 0.245 |
| 295.000 | 117.387 | 124.506 | 0.243 | 0.158 | 0.345 | 0.248 |
| 300.000 | 118.749 | 125.822 | 0.243 | 0.158 | 0.347 | 0.250 |

Table 2 - Composition "b" - Very Cold Temperature Range
R-22 - 87%;   R-23 - 8%:   R-152a - 5%

```
1    SATURATION PROPERTIES FOR   R23   /R22   /R152A /
     MIXING COEFFICIENT(S):  0.000 0.000 0.000
     COMPOSITION:  0.080 MASS FRACTION = 0.096 MOLE FRACTION R23
                   0.870 MASS FRACTION = 0.841 MOLE FRACTION R22
                   0.050 MASS FRACTION = 0.063 MOLE FRACTION R152A
     CRITICAL TEMPERATURE TC =    372.47 [K]
     CRITICAL PRESSURE PC=   5678.22 [KPA]
```

| PRESSURE | TEMPERATURE | | DENSITY | | ENTHALPY | | | ENTROPY | |
|---|---|---|---|---|---|---|---|---|---|
| | LIQ | VAP | LIQ | VAP | LIQ | EVAP | VAP | LIQ | VAP |
| (PSIA) | (F) | | (LB/FT$^3$) | | --- (BTU/LB) --- | | | (BTU/LB F) | |
| 55.000 | 1.506 | 16.148 | 81.483 | 0.980 | 11.188 | 96.886 | 108.075 | 0.038 | 0.244 |
| 60.000 | 6.131 | 20.629 | 80.951 | 1.065 | 12.475 | 96.060 | 108.534 | 0.041 | 0.243 |
| 65.000 | 10.472 | 24.833 | 80.445 | 1.151 | 13.689 | 95.268 | 108.957 | 0.043 | 0.242 |
| 70.000 | 14.566 | 28.797 | 79.963 | 1.236 | 14.841 | 94.507 | 109.348 | 0.046 | 0.241 |
| 75.000 | 18.445 | 32.550 | 79.502 | 1.321 | 15.938 | 93.772 | 109.711 | 0.048 | 0.240 |
| 80.000 | 22.133 | 36.118 | 79.058 | 1.406 | 16.987 | 93.062 | 110.049 | 0.050 | 0.240 |
| 85.000 | 25.651 | 39.520 | 78.631 | 1.492 | 17.992 | 92.372 | 110.364 | 0.052 | 0.239 |
| 90.000 | 29.017 | 42.774 | 78.218 | 1.577 | 18.959 | 91.701 | 110.660 | 0.054 | 0.238 |
| 95.000 | 32.246 | 45.894 | 77.818 | 1.663 | 19.890 | 91.048 | 110.938 | 0.056 | 0.238 |
| 100.000 | 35.349 | 48.892 | 77.430 | 1.749 | 20.789 | 90.409 | 111.199 | 0.058 | 0.237 |
| 105.000 | 38.338 | 51.778 | 77.053 | 1.835 | 21.660 | 89.785 | 111.445 | 0.060 | 0.237 |
| 110.000 | 41.223 | 54.563 | 76.686 | 1.921 | 22.503 | 89.174 | 111.677 | 0.061 | 0.236 |
| 115.000 | 44.012 | 57.254 | 76.327 | 2.008 | 23.322 | 88.575 | 111.897 | 0.063 | 0.236 |
| 120.000 | 46.711 | 59.858 | 75.977 | 2.095 | 24.118 | 87.987 | 112.105 | 0.064 | 0.235 |
| 125.000 | 49.328 | 62.382 | 75.634 | 2.182 | 24.893 | 87.409 | 112.302 | 0.066 | 0.235 |
| 130.000 | 51.869 | 64.831 | 75.299 | 2.269 | 25.648 | 86.840 | 112.488 | 0.067 | 0.234 |
| 135.000 | 54.338 | 67.210 | 74.970 | 2.357 | 26.385 | 86.280 | 112.665 | 0.069 | 0.234 |
| 140.000 | 56.740 | 69.524 | 74.648 | 2.444 | 27.105 | 85.728 | 112.834 | 0.070 | 0.234 |
| 145.000 | 59.079 | 71.776 | 74.331 | 2.533 | 27.809 | 85.184 | 112.993 | 0.072 | 0.233 |
| 150.000 | 61.360 | 73.971 | 74.019 | 2.621 | 28.498 | 84.647 | 113.145 | 0.073 | 0.233 |
| 155.000 | 63.585 | 76.112 | 73.712 | 2.710 | 29.173 | 84.117 | 113.289 | 0.074 | 0.232 |
| 160.000 | 65.757 | 78.202 | 73.411 | 2.799 | 29.834 | 83.592 | 113.426 | 0.075 | 0.232 |
| 165.000 | 67.881 | 80.244 | 73.113 | 2.888 | 30.483 | 83.074 | 113.557 | 0.077 | 0.232 |
| 170.000 | 69.957 | 82.240 | 72.820 | 2.978 | 31.119 | 82.562 | 113.681 | 0.078 | 0.231 |
| 175.000 | 71.989 | 84.192 | 72.531 | 3.068 | 31.745 | 82.054 | 113.799 | 0.079 | 0.231 |
| 180.000 | 73.978 | 86.103 | 72.245 | 3.159 | 32.359 | 81.552 | 113.911 | 0.080 | 0.231 |
| 185.000 | 75.928 | 87.975 | 71.963 | 3.250 | 32.964 | 81.054 | 114.017 | 0.081 | 0.230 |
| 190.000 | 77.839 | 89.810 | 71.684 | 3.341 | 33.558 | 80.560 | 114.119 | 0.082 | 0.230 |
| 195.000 | 79.713 | 91.609 | 71.408 | 3.433 | 34.144 | 80.071 | 114.215 | 0.083 | 0.230 |
| 200.000 | 81.553 | 93.374 | 71.136 | 3.525 | 34.720 | 79.586 | 114.306 | 0.084 | 0.229 |
| 205.000 | 83.360 | 95.106 | 70.866 | 3.617 | 35.289 | 79.104 | 114.393 | 0.085 | 0.229 |
| 210.000 | 85.134 | 96.807 | 70.599 | 3.710 | 35.849 | 78.626 | 114.475 | 0.086 | 0.229 |
| 215.000 | 86.878 | 98.478 | 70.334 | 3.803 | 36.401 | 78.151 | 114.552 | 0.087 | 0.228 |
| 220.000 | 88.593 | 100.120 | 70.072 | 3.897 | 36.946 | 77.679 | 114.626 | 0.088 | 0.228 |
| 225.000 | 90.279 | 101.735 | 69.812 | 3.991 | 37.484 | 77.211 | 114.695 | 0.089 | 0.228 |
| 230.000 | 91.939 | 103.324 | 69.555 | 4.085 | 38.016 | 76.745 | 114.761 | 0.090 | 0.228 |
| 235.000 | 93.572 | 104.886 | 69.299 | 4.180 | 38.540 | 76.282 | 114.823 | 0.091 | 0.227 |
| 240.000 | 95.180 | 106.425 | 69.046 | 4.276 | 39.059 | 75.822 | 114.881 | 0.092 | 0.227 |
| 245.000 | 96.765 | 107.939 | 68.794 | 4.372 | 39.572 | 75.364 | 114.935 | 0.093 | 0.227 |

Table 2 (Continued)

| | | | | | | | | | |
|---|---|---|---|---|---|---|---|---|---|
| 250.000 | 98.326 | 109.431 | 68.544 | 4.468 | 40.078 | 74.908 | 114.987 | 0.094 | 0.226 |
| 255.000 | 99.864 | 110.901 | 68.296 | 4.565 | 40.580 | 74.455 | 115.034 | 0.095 | 0.226 |
| 260.000 | 101.381 | 112.349 | 68.050 | 4.662 | 41.076 | 74.003 | 115.079 | 0.096 | 0.226 |
| 265.000 | 102.876 | 113.777 | 67.805 | 4.760 | 41.566 | 73.554 | 115.120 | 0.096 | 0.226 |
| 270.000 | 104.352 | 115.185 | 67.561 | 4.858 | 42.052 | 73.107 | 115.159 | 0.097 | 0.225 |
| 275.000 | 105.808 | 116.574 | 67.319 | 4.957 | 42.533 | 72.661 | 115.194 | 0.098 | 0.225 |
| 280.000 | 107.245 | 117.944 | 67.079 | 5.056 | 43.010 | 72.217 | 115.227 | 0.099 | 0.225 |
| 285.000 | 108.663 | 119.297 | 66.839 | 5.156 | 43.482 | 71.774 | 115.256 | 0.100 | 0.225 |
| 290.000 | 110.064 | 120.631 | 66.601 | 5.257 | 43.950 | 71.333 | 115.283 | 0.100 | 0.224 |
| 295.000 | 111.447 | 121.949 | 66.364 | 5.358 | 44.413 | 70.894 | 115.307 | 0.101 | 0.224 |
| 300.000 | 112.814 | 123.250 | 66.128 | 5.459 | 44.873 | 70.455 | 115.328 | 0.102 | 0.224 |

| PRESSURE | TEMPERATURE | | CV | | CP | |
|---|---|---|---|---|---|---|
| | LIQ | VAP | LIQ | VAP | LIQ | VAP |
| (PSIA) | (F) | | BTU/LB F | | BTU/LB F | |
| 5.000 | -96.340 | -78.956 | 0.212 | 0.111 | 0.249 | 0.136 |
| 10.000 | -72.908 | -56.137 | 0.217 | 0.116 | 0.254 | 0.142 |
| 15.000 | -57.615 | -41.258 | 0.220 | 0.119 | 0.258 | 0.146 |
| 20.000 | -45.951 | -29.916 | 0.222 | 0.121 | 0.262 | 0.149 |
| 30.000 | -28.223 | -12.692 | 0.225 | 0.125 | 0.267 | 0.154 |
| 40.000 | -14.632 | 0.500 | 0.228 | 0.127 | 0.271 | 0.158 |
| 45.000 | -8.803 | 6.154 | 0.229 | 0.129 | 0.273 | 0.160 |
| 50.000 | -3.451 | 11.344 | 0.230 | 0.130 | 0.275 | 0.162 |
| 55.000 | 1.506 | 16.148 | 0.230 | 0.131 | 0.277 | 0.164 |
| 60.000 | 6.131 | 20.629 | 0.231 | 0.132 | 0.278 | 0.166 |
| 65.000 | 10.472 | 24.833 | 0.232 | 0.133 | 0.280 | 0.168 |
| 70.000 | 14.566 | 28.797 | 0.232 | 0.133 | 0.281 | 0.170 |
| 75.000 | 18.445 | 32.550 | 0.233 | 0.134 | 0.283 | 0.171 |
| 80.000 | 22.133 | 36.118 | 0.233 | 0.135 | 0.284 | 0.173 |
| 85.000 | 25.651 | 39.520 | 0.234 | 0.136 | 0.286 | 0.175 |
| 90.000 | 29.017 | 42.774 | 0.234 | 0.137 | 0.287 | 0.176 |
| 95.000 | 32.246 | 45.894 | 0.235 | 0.137 | 0.289 | 0.178 |
| 100.000 | 35.349 | 48.892 | 0.235 | 0.138 | 0.290 | 0.179 |
| 105.000 | 38.338 | 51.778 | 0.236 | 0.139 | 0.291 | 0.181 |
| 110.000 | 41.223 | 54.563 | 0.236 | 0.139 | 0.293 | 0.183 |
| 115.000 | 44.012 | 57.254 | 0.236 | 0.140 | 0.294 | 0.184 |
| 120.000 | 46.711 | 59.858 | 0.237 | 0.141 | 0.295 | 0.186 |
| 125.000 | 49.328 | 62.382 | 0.237 | 0.141 | 0.297 | 0.187 |
| 130.000 | 51.869 | 64.831 | 0.237 | 0.142 | 0.298 | 0.189 |
| 135.000 | 54.338 | 67.210 | 0.238 | 0.142 | 0.299 | 0.190 |
| 140.000 | 56.740 | 69.524 | 0.238 | 0.143 | 0.300 | 0.192 |
| 145.000 | 59.079 | 71.776 | 0.238 | 0.144 | 0.302 | 0.194 |
| 150.000 | 61.360 | 73.971 | 0.239 | 0.144 | 0.303 | 0.195 |
| 155.000 | 63.585 | 76.112 | 0.239 | 0.145 | 0.304 | 0.197 |
| 160.000 | 65.757 | 78.202 | 0.239 | 0.145 | 0.306 | 0.198 |
| 165.000 | 67.881 | 80.244 | 0.239 | 0.146 | 0.307 | 0.200 |
| 170.000 | 69.957 | 82.240 | 0.239 | 0.146 | 0.308 | 0.202 |

Table 2 (Continued)

| | | | | | | |
|---|---|---|---|---|---|---|
| 175.000 | 71.989 | 84.192 | 0.240 | 0.147 | 0.309 | 0.203 |
| 180.000 | 73.978 | 86.103 | 0.240 | 0.147 | 0.311 | 0.205 |
| 185.000 | 75.928 | 87.975 | 0.240 | 0.148 | 0.312 | 0.206 |
| 190.000 | 77.839 | 89.810 | 0.240 | 0.148 | 0.313 | 0.208 |
| 195.000 | 79.713 | 91.609 | 0.240 | 0.149 | 0.315 | 0.210 |
| 200.000 | 81.553 | 93.374 | 0.241 | 0.149 | 0.316 | 0.211 |
| 205.000 | 83.360 | 95.106 | 0.241 | 0.150 | 0.317 | 0.213 |
| 210.000 | 85.134 | 96.807 | 0.241 | 0.150 | 0.319 | 0.215 |
| 215.000 | 86.878 | 98.478 | 0.241 | 0.151 | 0.320 | 0.217 |
| 220.000 | 88.593 | 100.120 | 0.241 | 0.151 | 0.321 | 0.218 |
| 225.000 | 90.279 | 101.735 | 0.241 | 0.152 | 0.323 | 0.220 |
| 230.000 | 91.939 | 103.324 | 0.241 | 0.152 | 0.324 | 0.222 |
| 235.000 | 93.572 | 104.886 | 0.241 - | 0.153 | 0.326 | 0.224 |
| 240.000 | 95.180 | 106.425 | 0.242 | 0.153 | 0.327 | 0.225 |
| 245.000 | 96.765 | 107.939 | 0.242 | 0.153 | 0.329 | 0.227 |
| 250.000 | 98.326 | 109.431 | 0.242 | 0.154 | 0.330 | 0.229 |
| 255.000 | 99.864 | 110.901 | 0.242 | 0.154 | 0.331 | 0.231 |
| 260.000 | 101.381 | 112.349 | 0.242 | 0.155 | 0.333 | 0.233 |
| 265.000 | 102.876 | 113.777 | 0.242 | 0.155 | 0.334 | 0.235 |
| 270.000 | 104.352 | 115.185 | 0.242 | 0.156 | 0.336 | 0.237 |
| 275.000 | 105.808 | 116.574 | 0.242 | 0.156 | 0.338 | 0.239 |
| 280.000 | 107.245 | 117.944 | 0.242 | 0.157 | 0.339 | 0.241 |
| 285.000 | 108.663 | 119.297 | 0.242 | 0.157 | 0.341 | 0.243 |
| 290.000 | 110.064 | 120.631 | 0.242 | 0.157 | 0.342 | 0.245 |
| 295.000 | 111.447 | 121.949 | 0.243 | 0.158 | 0.344 | 0.247 |
| 300.000 | 112.814 | 123.250 | 0.243 | 0.158 | 0.346 | 0.249 |

Table 3 - Composition - "c" - Warm Temperature Range
R-22 - 75%;  R-23 - 5%;  R-152a - 20%

SATURATION PROPERTIES FOR   R23   /R22   /R152A /
MIXING COEFFICIENT(S):  0.000 0.000 0.000
COMPOSITION:  0.050 MASS FRACTION = 0.058 MOLE FRACTION R23
              0.750 MASS FRACTION = 0.699 MOLE FRACTION R22
              0.200 MASS FRACTION = 0.244 MOLE FRACTION R152A
CRITICAL TEMPERATURE TC =    379.36 [K]
CRITICAL PRESSURE PC=   5639.44 [KPA]

| PRESSURE | TEMPERATURE | | DENSITY | | ENTHALPY | | | ENTROPY | |
|---|---|---|---|---|---|---|---|---|---|
| | LIQ | VAP | LIQ | VAP | LIQ | EVAP | VAP | LIQ | VAP |
| (PSIA) | (F) | | (LB/FT**3) | | --- (BTU/LB) --- | | | (BTU/LB F) | |
| 55.000 | 12.083 | 25.324 | 76.745 | 0.927 | 14.960 | 102.247 | 117.207 | 0.052 | 0.265 |
| 60.000 | 16.785 | 29.879 | 76.240 | 1.007 | 16.359 | 101.366 | 117.725 | 0.055 | 0.264 |
| 65.000 | 21.197 | 34.153 | 75.761 | 1.088 | 17.680 | 100.523 | 118.203 | 0.058 | 0.263 |
| 70.000 | 25.359 | 38.183 | 75.304 | 1.168 | 18.933 | 99.712 | 118.645 | 0.060 | 0.262 |
| 75.000 | 29.301 | 42.000 | 74.866 | 1.249 | 20.126 | 98.930 | 119.056 | 0.063 | 0.262 |
| 80.000 | 33.049 | 45.628 | 74.445 | 1.330 | 21.267 | 98.174 | 119.440 | 0.065 | 0.261 |
| 85.000 | 36.624 | 49.087 | 74.040 | 1.410 | 22.360 | 97.440 | 119.800 | 0.067 | 0.260 |
| 90.000 | 40.044 | 52.396 | 73.648 | 1.491 | 23.411 | 96.726 | 120.137 | 0.069 | 0.260 |
| 95.000 | 43.324 | 55.569 | 73.268 | 1.573 | 24.424 | 96.030 | 120.454 | 0.071 | 0.259 |
| 100.000 | 46.476 | 58.618 | 72.899 | 1.654 | 25.402 | 95.351 | 120.753 | 0.073 | 0.259 |
| 105.000 | 49.513 | 61.554 | 72.540 | 1.735 | 26.348 | 94.688 | 121.036 | 0.075 | 0.258 |
| 110.000 | 52.443 | 64.386 | 72.191 | 1.817 | 27.265 | 94.038 | 121.303 | 0.077 | 0.258 |
| 115.000 | 55.276 | 67.123 | 71.850 | 1.899 | 28.156 | 93.400 | 121.556 | 0.078 | 0.257 |
| 120.000 | 58.018 | 69.772 | 71.516 | 1.981 | 29.022 | 92.775 | 121.796 | 0.080 | 0.257 |
| 125.000 | 60.676 | 72.340 | 71.190 | 2.064 | 29.864 | 92.160 | 122.024 | 0.082 | 0.256 |
| 130.000 | 63.256 | 74.831 | 70.871 | 2.146 | 30.686 | 91.555 | 122.241 | 0.083 | 0.256 |
| 135.000 | 65.763 | 77.251 | 70.558 | 2.229 | 31.487 | 90.960 | 122.447 | 0.085 | 0.256 |
| 140.000 | 68.202 | 79.605 | 70.250 | 2.312 | 32.270 | 90.373 | 122.643 | 0.086 | 0.255 |
| 145.000 | 70.578 | 81.897 | 69.948 | 2.396 | 33.036 | 89.794 | 122.830 | 0.088 | 0.255 |
| 150.000 | 72.893 | 84.131 | 69.651 | 2.480 | 33.785 | 89.223 | 123.008 | 0.089 | 0.254 |
| 155.000 | 75.152 | 86.309 | 69.359 | 2.564 | 34.519 | 88.659 | 123.178 | 0.090 | 0.254 |
| 160.000 | 77.358 | 88.436 | 69.071 | 2.648 | 35.238 | 88.102 | 123.340 | 0.092 | 0.254 |
| 165.000 | 79.514 | 90.513 | 68.788 | 2.733 | 35.944 | 87.551 | 123.494 | 0.093 | 0.253 |
| 170.000 | 81.621 | 92.544 | 68.508 | 2.818 | 36.636 | 87.005 | 123.641 | 0.094 | 0.253 |
| 175.000 | 83.684 | 94.531 | 68.232 | 2.903 | 37.316 | 86.466 | 123.782 | 0.095 | 0.253 |
| 180.000 | 85.704 | 96.476 | 67.959 | 2.989 | 37.985 | 85.931 | 123.916 | 0.097 | 0.252 |
| 185.000 | 87.683 | 98.381 | 67.690 | 3.075 | 38.642 | 85.402 | 124.044 | 0.098 | 0.252 |
| 190.000 | 89.623 | 100.248 | 67.424 | 3.162 | 39.289 | 84.877 | 124.166 | 0.099 | 0.252 |
| 195.000 | 91.525 | 102.079 | 67.161 | 3.248 | 39.926 | 84.357 | 124.283 | 0.100 | 0.251 |
| 200.000 | 93.393 | 103.876 | 66.900 | 3.336 | 40.553 | 83.841 | 124.394 | 0.101 | 0.251 |
| 205.000 | 95.226 | 105.639 | 66.642 | 3.423 | 41.171 | 83.328 | 124.500 | 0.102 | 0.251 |
| 210.000 | 97.027 | 107.370 | 66.387 | 3.511 | 41.781 | 82.820 | 124.601 | 0.103 | 0.250 |
| 215.000 | 98.797 | 109.071 | 66.134 | 3.600 | 42.382 | 82.315 | 124.697 | 0.104 | 0.250 |
| 220.000 | 100.537 | 110.743 | 65.884 | 3.688 | 42.975 | 81.813 | 124.788 | 0.105 | 0.250 |
| 225.000 | 102.249 | 112.387 | 65.636 | 3.778 | 43.560 | 81.315 | 124.875 | 0.106 | 0.250 |
| 230.000 | 103.932 | 114.004 | 65.389 | 3.867 | 44.138 | 80.819 | 124.958 | 0.107 | 0.249 |
| 235.000 | 105.590 | 115.595 | 65.145 | 3.957 | 44.709 | 80.327 | 125.036 | 0.108 | 0.249 |
| 240.000 | 107.222 | 117.161 | 64.902 | 4.048 | 45.274 | 79.837 | 125.110 | 0.109 | 0.249 |
| 245.000 | 108.829 | 118.703 | 64.662 | 4.139 | 45.831 | 79.349 | 125.181 | 0.110 | 0.249 |
| 250.000 | 110.413 | 120.222 | 64.423 | 4.230 | 46.383 | 78.864 | 125.247 | 0.111 | 0.248 |

Table 3 (Continued)

| | | | | | | | | | |
|---|---|---|---|---|---|---|---|---|---|
| 255.000 | 111.974 | 121.718 | 64.185 | 4.322 | 46.928 | 78.382 | 125.310 | 0.112 | 0.248 |
| 260.000 | 113.513 | 123.193 | 63.949 | 4.414 | 47.468 | 77.901 | 125.370 | 0.113 | 0.248 |
| 265.000 | 115.030 | 124.647 | 63.715 | 4.507 | 48.002 | 77.423 | 125.425 | 0.114 | 0.247 |
| 270.000 | 116.527 | 126.081 | 63.482 | 4.601 | 48.531 | 76.947 | 125.478 | 0.115 | 0.247 |
| 275.000 | 118.004 | 127.495 | 63.250 | 4.694 | 49.055 | 76.472 | 125.527 | 0.116 | 0.247 |
| 280.000 | 119.462 | 128.890 | 63.019 | 4.789 | 49.573 | 75.999 | 125.572 | 0.117 | 0.247 |
| 285.000 | 120.900 | 130.267 | 62.790 | 4.883 | 50.087 | 75.528 | 125.615 | 0.118 | 0.246 |
| 290.000 | 122.321 | 131.626 | 62.562 | 4.979 | 50.596 | 75.058 | 125.655 | 0.118 | 0.246 |
| 295.000 | 123.725 | 132.968 | 62.335 | 5.074 | 51.101 | 74.590 | 125.691 | 0.119 | 0.246 |
| 300.000 | 125.111 | 134.293 | 62.109 | 5.171 | 51.601 | 74.123 | 125.724 | 0.120 | 0.246 |

| PRESSURE | TEMPERATURE | | CV | | CP | |
|---|---|---|---|---|---|---|
| | LIQ | VAP | LIQ | VAP | LIQ | VAP |
| (PSIA) | (F) | | BTU/LB F | | BTU/LB F | |
| 5.000 | -87.574 | -71.276 | 0.228 | 0.122 | 0.266 | 0.148 |
| 10.000 | -63.667 | -48.112 | 0.233 | 0.127 | 0.272 | 0.154 |
| 15.000 | -48.081 | -33.004 | 0.237 | 0.130 | 0.276 | 0.158 |
| 20.000 | -36.200 | -21.484 | 0.239 | 0.133 | 0.280 | 0.161 |
| 30.000 | -18.155 | -3.986 | 0.242 | 0.136 | 0.285 | 0.167 |
| 40.000 | -4.328 | 9.420 | 0.245 | 0.140 | 0.290 | 0.172 |
| 45.000 | 1.601 | 15.166 | 0.246 | 0.141 | 0.292 | 0.174 |
| 50.000 | 7.043 | 20.440 | 0.247 | 0.142 | 0.294 | 0.176 |
| 55.000 | 12.083 | 25.324 | 0.247 | 0.143 | 0.296 | 0.178 |
| 60.000 | 16.785 | 29.879 | 0.248 | 0.144 | 0.298 | 0.180 |
| 65.000 | 21.197 | 34.153 | 0.249 | 0.145 | 0.299 | 0.182 |
| 70.000 | 25.359 | 38.183 | 0.250 | 0.146 | 0.301 | 0.184 |
| 75.000 | 29.301 | 42.000 | 0.250 | 0.147 | 0.303 | 0.186 |
| 80.000 | 33.049 | 45.628 | 0.251 | 0.148 | 0.304 | 0.187 |
| 85.000 | 36.624 | 49.087 | 0.251 | 0.149 | 0.306 | 0.189 |
| 90.000 | 40.044 | 52.396 | 0.252 | 0.150 | 0.307 | 0.191 |
| 95.000 | 43.324 | 55.569 | 0.252 | 0.151 | 0.309 | 0.193 |
| 100.000 | 46.476 | 58.618 | 0.253 | 0.151 | 0.310 | 0.194 |
| 105.000 | 49.513 | 61.554 | 0.253 | 0.152 | 0.312 | 0.196 |
| 110.000 | 52.443 | 64.386 | 0.254 | 0.153 | 0.313 | 0.198 |
| 115.000 | 55.276 | 67.123 | 0.254 | 0.154 | 0.315 | 0.199 |
| 120.000 | 58.018 | 69.772 | 0.254 | 0.154 | 0.316 | 0.201 |
| 125.000 | 60.676 | 72.340 | 0.255 | 0.155 | 0.318 | 0.203 |
| 130.000 | 63.256 | 74.831 | 0.255 | 0.156 | 0.319 | 0.204 |
| 135.000 | 65.763 | 77.251 | 0.255 | 0.156 | 0.320 | 0.206 |
| 140.000 | 68.202 | 79.605 | 0.256 | 0.157 | 0.322 | 0.208 |
| 145.000 | 70.578 | 81.897 | 0.256 | 0.158 | 0.323 | 0.210 |
| 150.000 | 72.893 | 84.131 | 0.256 | 0.158 | 0.325 | 0.211 |
| 155.000 | 75.152 | 86.309 | 0.256 | 0.159 | 0.326 | 0.213 |
| 160.000 | 77.358 | 88.436 | 0.257 | 0.159 | 0.327 | 0.215 |
| 165.000 | 79.514 | 90.513 | 0.257 | 0.160 | 0.329 | 0.216 |
| 170.000 | 81.621 | 92.544 | 0.257 | 0.160 | 0.330 | 0.218 |
| 175.000 | 83.684 | 94.531 | 0.257 | 0.161 | 0.332 | 0.220 |

14

Table 3 (Continued)

| | | | | | | |
|---|---|---|---|---|---|---|
| 180.000 | 85.704 | 96.476 | 0.257 | 0.162 | 0.333 | 0.221 |
| 185.000 | 87.683 | 98.381 | 0.258 | 0.162 | 0.335 | 0.223 |
| 190.000 | 89.623 | 100.248 | 0.258 | 0.163 | 0.336 | 0.225 |
| 195.000 | 91.525 | 102.079 | 0.258 | 0.163 | 0.337 | 0.227 |
| 200.000 | 93.393 | 103.876 | 0.258 | 0.164 | 0.339 | 0.228 |
| 205.000 | 95.226 | 105.639 | 0.258 | 0.164 | 0.340 | 0.230 |
| 210.000 | 97.027 | 107.370 | 0.259 | 0.165 | 0.342 | 0.232 |
| 215.000 | 98.797 | 109.071 | 0.259 | 0.165 | 0.343 | 0.234 |
| 220.000 | 100.537 | 110.743 | 0.259 | 0.166 | 0.345 | 0.236 |
| 225.000 | 102.249 | 112.387 | 0.259 | 0.166 | 0.346 | 0.238 |
| 230.000 | 103.932 | 114.004 | 0.259 | 0.167 | 0.348 | 0.239 |
| 235.000 | 105.590 | 115.595 | 0.259 | 0.167 | 0.349 | 0.241 |
| 240.000 | 107.222 | 117.161 | 0.259 | 0.168 | 0.351 | 0.243 |
| 245.000 | 108.829 | 118.703 | 0.260 | 0.168 | 0.353 | 0.245 |
| 250.000 | 110.413 | 120.222 | 0.260 | 0.169 | 0.354 | 0.247 |
| 255.000 | 111.974 | 121.718 | 0.260 | 0.169 | 0.356 | 0.249 |
| 260.000 | 113.513 | 123.193 | 0.260 | 0.170 | 0.357 | 0.251 |
| 265.000 | 115.030 | 124.647 | 0.260 | 0.170 | 0.359 | 0.253 |
| 270.000 | 116.527 | 126.081 | 0.260 | 0.171 | 0.361 | 0.255 |
| 275.000 | 118.004 | 127.495 | 0.260 | 0.171 | 0.362 | 0.257 |
| 280.000 | 119.462 | 128.890 | 0.260 | 0.172 | 0.364 | 0.259 |
| 285.000 | 120.900 | 130.267 | 0.260 | 0.172 | 0.366 | 0.262 |
| 290.000 | 122.321 | 131.626 | 0.260 | 0.173 | 0.368 | 0.264 |
| 295.000 | 123.725 | 132.968 | 0.260 | 0.173 | 0.369 | 0.266 |
| 300.000 | 125.111 | 134.293 | 0.261 | 0.174 | 0.371 | 0.268 |

## Claims

1. A non-azeotropic refrigerant mixture which is a ternary mixture of known refrigerants, characterized in that it consists of:

| | |
|---|---|
| trifluoromethane (R-23) | 4% to 10%; |
| 1,1-difluoroethane (R-152a) | 4% to 30%; |
| chlorodifluoromethane (R-22) | Balance. |

2. A non-azeotropic refrigerant mixture according to claim 1, consisting of:

| | |
|---|---|
| R-23 | 4% to 6%; |
| R-152a | 4% to 6%; |
| R-22 | Balance. |

3. A non-azeotropic refrigerant mixture according to claim 1, consisting of:

15

EP 0 580 732 B1

| R-23 | 7% to 10%; |
| R-152a | 4% to 6%; |
| R-22 | Balance. |

4. A non-azeotropic refrigerant mixture according to claim 1, consisting of:

| R-23 | 4% to 6%; |
| R-152a | 8% to 30%; |
| R-22 | Balance. |

5. A heat transfer process of the kind using a heat pump, and wherein a refrigerant is successively evaporated while extracting heat from a heat source and then condensed while giving heat to receiving fluid, and wherein the refrigerant is a non-azeotropic ternary mixture of known refrigerants, characterized in that it consists of:

| trifluoromethane (R-23) | 4% to 10%; |
| 1,1-difluoroethane (R-152a) | 4% to 30%; |
| chlorodifluoromethane (R-22) | Balance. |

6. A heat transfer process according to claim 5, wherein the heat source has a temperature range between 0°C and 13°C, and wherein the refrigerant is a non-azeotropic ternary mixture consisting of:

| R-23 | 4% to 6%; |
| R-152a | 4% to 6%; |
| R-22 | Balance. |

7. A heat transfer process according to claim 5, wherein the heat source has a temperature range between -30°C and 0°C, and wherein the refrigerant is a non-azeotropic ternary mixture consisting of:

| R-23 | 7% to 10%; |
| R-152a | 4% to 6%; |
| R-22 | Balance. |

8. A heat transfer process according to claim 5, wherein the heat source has a temperature range between 13°C and 20°C, and wherein the refrigerant is a non-azeotropic ternary mixture consisting of:

| R-23 | 4% to 6%; |
| R-152a | 8% to 30%; |
| R-22 | Balance. |

9. A heat pump having a refrigerant as claimed in claim 1.

10. A heat pump having a refrigerant as claimed in claim 2.

11. A heat pump having a refrigerant as claimed in claim 3.

16

EP 0 580 732 B1

**12.** A heat pump having a refrigerant as claimed in claim 4.

**Patentansprüche**

**1.** Nicht-azeotrope Kühlmittelmischung aus einem ternären Gemisch an sich bekannter Kühlmittel, dadurch gekennzeichnet, daß sie aus

| Trifluormethan (R-23) | 4 bis 10 %, |
|---|---|
| 1,1-Difluorethan (R-152a) | 4 bis 30 % und |
| Chlordifluormethan (R-22) | als Rest |

besteht.

**2.** Nicht-azeotrope Kühlmittelmischung gemäß Anspruch 1, welche aus

| R-23 | 4 bis 6%, |
|---|---|
| R-152a | 4 bis 6 % und |
| R-22 | als Rest |

besteht.

**3.** Nicht-azeotrope Kühlmittelmischung gemäß Anspruch 1, welche aus

| R-23 | 7 bis 10 %, |
|---|---|
| R-152a | 4 bis 6 % und |
| R-22 | als Rest |

besteht.

**4.** Nicht-azeotrope Kühlmitttelmischung gemäß Anspruch 1, welche aus

| R-23 | 4 bis 6%, |
|---|---|
| R-152a | 8 bis 30 % und |
| R-22 | als Rest |

besteht.

**5.** Verfahren zur Wärmeübertragung unter Verwendung einer Wärmepumpe, bei dem das Kühlmittel sukkzessive abgedampft wird, während Wärme aus einer Wärmequelle entnommen wird, und anschließend kondensiert wird, während die Wärme an das Empfängerfluid abgegeben wird, und bei dem das Kühlmittel ein nicht-azeotropes, ternäres Gemisch an sich bekannter Kühlmittel ist, dadurch gekennzeichnet, daß das Gemisch aus

| Trifluormethan (R-23) | 4 bis 10 %, |
|---|---|
| 1,1-Difluorethan (R-152a) | 4 bis 30 % und |
| Chlordifluormethan (R-22) | als Rest |

besteht.

**6.** Verfahren zur Wärmeübertragung gemäß Anspruch 5, bei dem die Wärmequelle eine Temperatur im Bereich zwischen 0 °C und 13 °C hat und das Kühlmittel ein nicht-azeotropes, ternäres Gemisch aus

17

| R-23 | 4 bis 6%, |
|------|-----------|
| R-152a | 4 bis 6 % und |
| R-22 | als Rest |

ist.

7. Verfahren zur Wärmeübertragung gemäß Anspruch 5, bei dem die Wärmequelle eine Temperatur im Bereich zwischen -30 °C und 0 °C hat und das Kühlmittel ein nicht-azeotropes, ternäres Gemisch aus

| R-23 | 7 bis 10 %, |
|------|-------------|
| R-152a | 4 bis 6 % und |
| R-22 | als Rest |

ist.

8. Verfahren zur Wärmeübertragung gemäß Anspruch 5, bei dem die Wärmequelle eine Temperatur im Bereich zwischen 13 °C und 20 °C hat und das Kühlmittel ein nicht-azeotropes, ternäres Gemisch aus

| R-23 | 4 bis 6%, |
|------|-----------|
| R-152a | 8 bis 30 % und |
| R-22 | als Rest |

ist.

9. Wärmepumpe mit einem Kühlmittel gemäß Anspruch 1.

10. Wärmepumpe mit einem Kühlmittel gemäß Anspruch 2.

11. Wärmepumpe mit einem Kühlmittel gemäß Anspruch 3.

12. Wärmepumpe mit einem Kühlmittel gemäß Anspruch 4.

**Revendications**

1. Mélange réfrigérant non-azéotropique qui est constitué par un mélange ternaire de réfrigérants connus, caractérisé en ce qu'il comprend :

| trifluorométhane (R-23) | 4% à 10% |
|-------------------------|----------|
| 1,1 -difluoroéthane (R-152a) | 4% à 30% |
| Chlorodifluoromethane (R-22) | Balance |

2. Mélange réfrigérant non-azéotropique suivant la revendication 1, comprenant :

| R-23 | 4% à 6% |
|------|---------|
| R-152a | 4% à 6% |
| R-22 | Balance |

3. Mélange réfrigérant non-azéotropique suivant la revendication 1, comprenant :

| R-23 | 7% à 10% |
|------|----------|
| R-152a | 4% à 6% |
| R-22 | Balance |

4. Mélange réfrigérant non-azéotropique suivant la revendication 1, comprenant :

| R-23 | 4% à 6% |
|------|----------|
| R-152a | 8% à 30% |
| R-22 | Balance |

5. Procédé de transfert de chaleur, du genre utilisant une pompe à chaleur et dans lequel un réfrigérant est successivement évaporé tout en extrayant de la chaleur à partir d'une source de chaleur, puis condensé tout en fournissant de la chaleur à un fluide récepteur, et dans lequel le réfrigérant est un mélange ternaire azéotropique de réfrigérants connus, caractérisé en ce qu'il comprend :

| trifluorométhane (R-23) | 4% à 10% |
|-------------------------|----------|
| 1,1-difluoroéthane (R-152a) | 4% à 30% |
| chlorodifluorométhane (R-22) | Balance |

6. Procédé de transfert de chaleur suivant la revendication 5, dans lequel la source de chaleur présente une plage de température comprise entre 0°C et 13°C, et dans lequel le réfrigérant est un mélange non-azéotropique qui comprend :

| R-23 | 4% à 6% |
|------|---------|
| R-152a | 4% à 6% |
| R-22 | Balance |

7. Procédé de transfert de chaleur suivant la revendication 5, caractérisé en ce que la source de chaleur présente une plage de température comprise entre -30°C et 0°C, et dans lequel le réfrigérant est un mélange non-azéotropique qui comprend :

| R-23 | 7% à 10% |
|------|----------|
| R-152a | 4% à 6% |
| R-22 | Balance |

8. Procédé de transfert de chaleur suivant la revendication 5, caractérisé en ce que la source de chaleur présente une plage de température comprise entre 13°C et 20°C, et dans lequel le réfrigérant est un mélange non-azéotropique qui comprend :

| R-23 | 4% à 6% |
|------|----------|
| R-152a | 8% à 30% |
| R-22 | Balance |

9. Pompe à chaleur renfermant un réfrigérant tel que revendiqué dans la revendication 1.

10. Pompe à chaleur renfermant un réfrigérant tel que revendiqué dans la revendication 2.

**11.** Pompe à chaleur renfermant un réfrigérant tel que revendiqué dans la revendication 3.

**12.** Pompe à chaleur renfermant un réfrigérant tel que revendiqué dans la revendication 4.

FIG. I

$P_H > P_L$

1: SUBCOOLED LIQUID STATE
2: SATURATED LIQUID STATE
3: SATURATED MIXTURE STATE
3f: SATURATED LIQUID STATE
3g: SATURATED VAPOR STATE
4: SATURATED VAPOR STATE
5: SATURATED VAPOR STATE

$P_1 = P_2 = P_3 = P_{3_f} = P_{3_g} = P_4$
$\quad = P_5 = P_L$

$T_3 = T_{3_f} = T_{3_g}$

$X_1 = X_2 = X_3 = X_4 = X_5$

$P_H > P_L$

FIG. 2a

22

FIG. 2b

ENTROPY, S

R22 PURE
R23/R22/R152a 5/75/20%

FIG. 3

FIG. 4

STANDAND ERROR OF THE MEAN

TEMP. AIR COND. OUTLET (C)

IDENTIFICATION NUMBER OF REFRIGERANT

1) R-22 PURE
2) R-23/R-22  5%/ 95%
(C₂) 3) R-23/R-22/R-152a  5%/ 85%/ 10%
(C₁) 4) R-23/R-22/R-152a  5%/ 75%/20%

FIG. 5

STANDAND ERROR OF THE MEAN

C.O.P. HEATING

IDENTIFICATION NUMBER OF REFRIGERANT

1) R-22 PURE
2) R-23/R-22  5%/ 95%
(C₂) 3) R-23/R-22/R-152a  5%/ 85%/ 10%
(C₁) 4) R-23/R-22/R-152a  5%/ 75%/20%

FIG. 6

1) R-22 PURE
2) R-23/R-22  5%/ 95%
3) R-23/R-22/R-152a  5%/ 85%/ 10%
4) R-23/R-22/R-152a  5%/ 75%/ 20%

FIG. 7

1) R-22 PURE
2) R-23/R-22  5%/ 95%
3) R-23/R-22/R-152a  5%/ 85%/ 10%
4) R-23/R-22/R-152a  5%/ 75%/ 20%

25

IDENTIFICATION NUMBER OF REFRIGERANT

1) R-22 PURE
2) R-23/R-22  5%/95%
3) R-23/R-22/R-152a  5%/85%/10%
4) R-23/R-22/R-152a  5%/75%/20%

# FIG. 8

FIG. 9

FIG. 10